# DEMANDE DE BREVET EUROPEEN

(11) **EP 2 590 149 A1**
(43) Date de publication de la demande: **08.05.2013**
(21) Numéro de dépôt: 12190756.2
(22) Date de dépôt: 31.10.2012
(51) Int. Cl.: G08C 17/02, H04L 12/28

(54) **Système domotique à actionneurs reconfigurables**

(30) Priorité: 04.11.2011 FR 1160003
(71) Demandeur: Automation Plus, 85110 Saint-Prouant (FR)
(72) Inventeur: Loiseau, Sébastien, 85110 Saint-Prouant (FR)
(74) Mandataire: Chaillot, Geneviève

(57) **Abrégé**

L'invention a pour objet un système domotique (1) pour la commande de dispositifs commandés dans un bâtiment (2), ledit système (1) comprenant un boîtier comprenant un relais (4), chaque sortie du relais (4) étant connectée à l'un des dispositifs commandés, un récepteur (5) de signaux sans fil, un automate (3) commandant l'ouverture et la fermeture de chaque sortie du relais (4), en fonction de signaux reçus sur le récepteur (5) et des actionneurs (6) aptes à émettre un signal au récepteur (5) dans le boîtier pour la commande des dispositifs commandés, caractérisé par le fait que le signal émis au récepteur (5) par chaque actionneur (6) est identifié dans le système (1) par un code unique pour chaque actionneur (6), le système (1) comprenant en outre une interface utilisateur (7) pour associer de manière reconfigurable par l'utilisateur dans l'automate (3) le code unique de chaque actionneur (6) et l'un des dispositifs commandés par le système (1), un actionneur (6) commandant dans le système (1) le dispositif commandé auquel son code unique est associé dans l'automate (3) .

## Description

La présente invention concerne le domaine de la domotique et porte en particulier sur un système domotique dans lequel les actionneurs permettant de commander différents dispositifs dans un bâtiment sont reconfigurables par l'utilisateur.

Les systèmes domotiques existants permettent à leurs utilisateurs de commander divers dispositifs dans un bâtiment, tels que par exemple un système d'éclairage, un système de chauffage, un système de climatisation, un système d'ouverture/fermeture de volets, un système d'arrosage de jardin, un système de vidéosurveillance, un système d'ouverture/fermeture de porte, un système de ventilation mécanique contrôlée (VMC), un thermostat ou tout autre système pouvant être commandé par un système domotique. Ces dispositifs sont désignés de manière générale dans ce qui suit par dispositifs commandés par le système domotique ou dispositifs commandés.

La commande de ces différents dispositifs commandés s'effectue par programmation d'un automate dans le système domotique, auquel cas l'automate commande ces dispositifs commandés suivant des paramètres préconfigurés par l'utilisateur, ou par l'intermédiaire d'actionneurs distribués dans le bâtiment dans lequel sont installés le système domotique et les différents dispositifs commandés qu'il commande, auquel cas l'actionnement par un utilisateur d'un actionneur amène l'automate à commander le dispositif commandé associé à l'actionneur, suivant la commande entrée par l'utilisateur sur cet actionneur.

Un actionneur utilisé dans un système domotique peut notamment être un interrupteur, un clavier, un gradateur, un capteur de température, un capteur de passage, un capteur de présence, un capteur d'humidité, un capteur de luminosité, un détecteur de fumée et analogues.

Les systèmes domotiques existants présentent des inconvénients.

En effet, il est courant que les actionneurs soient reliés de manière câblée à l'automate, ce qui rend tout changement de configuration du système domotique, par exemple lors de travaux dans le bâtiment, problématique. Même lorsqu'ils sont reliés de manière sans fil à l'automate, il est souvent difficile pour l'utilisateur de configurer facilement les différents actionneurs, et il est nécessaire de faire appel à un spécialiste pour reprogrammer de manière appropriée l'automate, ce qui engendre pour l'utilisateur des coûts importants.

L'invention vise à résoudre ces inconvénients, et propose un système domotique dans lequel les actionneurs peuvent être facilement configurés par l'utilisateur, sans besoin de faire appel à un spécialiste.

La présente invention a donc pour objet un système domotique pour la commande de dispositifs commandés dans un bâtiment, ledit système domotique comprenant :
- un boîtier comprenant :
   - une alimentation électrique ;
   - un relais, chaque sortie du relais étant connectée à l'un des dispositifs commandés par le système domotique ;
   - un récepteur de signaux sans fil ;
   - un automate commandant l'ouverture et la fermeture de chaque sortie du relais, en fonction de signaux reçus sur le récepteur de signaux sans fil ; et
- des actionneurs sans fil du système domotique, répartis dans le bâtiment, aptes à émettre de manière sans fil un signal au récepteur de signaux sans fil dans le boîtier pour la commande des dispositifs commandés par le système domotique,
caractérisé par le fait que le signal émis de manière sans fil au récepteur de signaux par chaque actionneur est identifié dans le système domotique par un code unique pour chaque actionneur, le système domotique comprenant en outre une interface utilisateur pour associer de manière reconfigurable par l'utilisateur dans l'automate le code unique de chaque actionneur et l'un des dispositifs commandés par le système domotique, un actionneur commandant dans le système domotique le dispositif commandé auquel son code unique est associé dans l'automate.

Par l'intermédiaire de l'interface utilisateur, l'utilisateur peut facilement configurer l'association actionneur-dispositif commandé car un code unique est associé à chaque actionneur. L'association est configurée par l'utilisateur dans l'automate par l'intermédiaire de l'interface utilisateur.

En pratique, l'utilisateur choisit sur l'interface utilisateur le dispositif commandé qu'il souhaite commander avec un actionneur particulier, actionne l'actionneur qui transmet donc à l'automate un code unique, et un programme dans l'automate associe ce code unique au dispositif commandé. Le système domotique fonctionne donc par apprentissage.

Il n'est ainsi plus nécessaire de faire appel à un spécialiste pour configurer le système domotique, ce qui rend le système domotique plus flexible pour l'utilisateur et moins coûteux.

Selon une première caractéristique particulière, le récepteur de signaux sans fil peut être intégré à l'automate.

Les actionneurs peuvent émettre sur une même fréquence un signal codé sur un ou plusieurs octets, un code unique étant associé à chaque actionneur dans le système domotique et le récepteur de signaux peut transmettre le code reçu directement à l'automate. Avantageusement, le signal peut être codé sur 14 octets.

Le signal peut notamment être un signal de type Enocean^{®} (marque déposée), les actionneurs et le récepteur de signaux étant alors des dispositifs Enocean^{®} communiquant entre eux par utilisation de la norme de communication Enocean^{®}.

Selon un autre mode de réalisation, les actionneurs peuvent être des émetteurs radio, émettant sur différentes fréquences, le système domotique comprenant en outre des moyens d'association d'un code unique à chaque fréquence, lesdits moyens d'association étant connectés au récepteur de signaux sans fil et transmettant un code unique pour chaque actionneur à l'automate lors de la réception d'un signal sans fil sur le récepteur de signaux sans fils. Les moyens d'association sont avantageusement une carte d'entrée dont les entrées sont connectées au récepteur de signaux sans fils, et qui émet en sortie, lorsqu'elle reçoit un signal sur l'une de ses entrées, un code unique à chaque entrée.

Selon une caractéristique particulière de l'invention, l'interface utilisateur est une interface graphique, de préférence un écran tactile.

Selon une autre caractéristique particulière de l'invention, les actionneurs sont autonomes en énergie, de type à récolte d'énergie. De préférence, les actionneurs sont de type Enocean^{®}. Ils présentent l'intérêt de ne pas avoir à être reliés au secteur, ce qui facilite leur pose et permet de les placer dans des endroits où il n'y a pas d'installation électrique.

Selon une autre caractéristique particulière de l'invention, les dispositifs commandés par le système domotique sont un ou plusieurs parmi : un système d'éclairage, un système de chauffage, un système de climatisation, un système d'ouverture/fermeture de volets, un système d'arrosage de jardin, un système de vidéosurveillance, un système d'ouverture/fermeture de porte, un système de ventilation mécanique contrôlée, un thermostat.

Selon une autre caractéristique particulière de l'invention, chaque actionneur est l'un parmi un interrupteur, un clavier, un gradateur, un capteur de température, un capteur de passage, un capteur de présence, un capteur d'humidité, un capteur de luminosité, un détecteur de fumée.

Selon une autre caractéristique particulière de l'invention, le système domotique comprend en outre des moyens de commande à distance de l'automate. Il est ainsi possible également de relier l'automate à un ordinateur de type ordinateur personnel ou téléphone intelligent de l'utilisateur, lui permettant, par l'intermédiaire d'un logiciel approprié, de communiquer avec l'automate pour le configurer. La liaison de l'ordinateur avec l'automate peut par exemple être câblée (par exemple un câble USB ou RJ45), ou sans fil (WIFI), une connectique appropriée (prise USB ou RJ45 ou borne WIFI) étant alors incorporée dans le boîtier et reliée à l'automate. L'automate peut également être relié à un réseau intranet ou à l'Internet, afin de pouvoir configurer à distance l'automate.

Pour mieux illustrer l'objet de la présente invention, on va en décrire ci-après un mode de réalisation particulier avec référence au dessin annexé.

Sur ce dessin :
- la Figure 1 est une représentation schématique du système domotique selon un premier mode de réalisation de l'invention ; et
- la Figure 2 est une représentation schématique du système domotique selon un deuxième mode de réalisation de l'invention

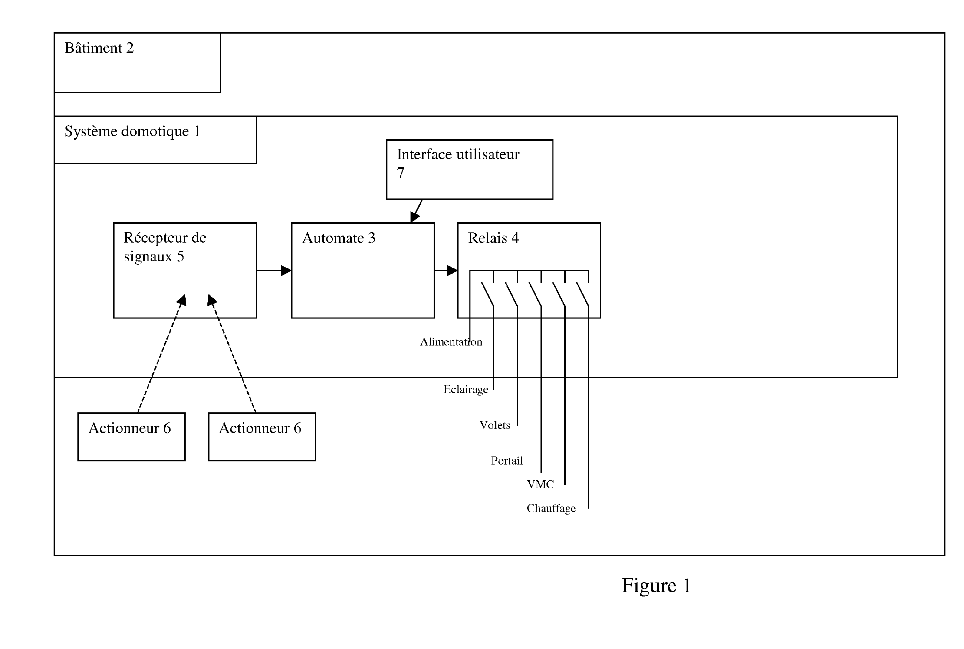

Si l'on se réfère à la Figure 1, on peut voir qu'il y est représenté un système domotique 1 selon un premier mode de réalisation de la présente invention, installé dans un bâtiment 2.

Le bâtiment 2 peut être tout type de bâtiment, une maison, un appartement, des bureaux etc.

Le système domotique 1 se présente sous la forme d'un boîtier qui comprend principalement un automate 3, un relais 4, un récepteur de signaux 5, et différents actionneurs 6. Le système domotique 1 est alimenté électriquement (alimentation non représentée). En pratique, le boîtier du système domotique 1 est placé juste après le tableau électrique desservant le bâtiment 2.

L'automate 3 est en pratique un microcontrôleur ou un processeur, associé à une mémoire.

L'automate 3 est connecté au relais 4, et commande celui-ci. Chaque sortie du relais 4 est connectée à l'un des dispositifs commandés par le système domotique 1. Les dispositifs commandés sont dans le bâtiment 2, en dehors du boîtier du système domotique 1. Sur la Figure 1, on a indiqué à titre d'exemple quelques éléments qui pourraient être commandés par le système domotique 1, tels qu'un éclairage, des volets, un portail, une VMC ou un chauffage. Cette indication sur la Figure 1 ne doit bien entendue pas être considérée comme limitative, et tout dispositif susceptible d'être commandé par un système domotique pourrait être connecté sur une sortie du relais 4.

La liaison entre chaque sortie du relais 4 et le dispositif commandé correspondant peut être câblée, mais peut également se faire au moyen d'une liaison RF sans fil, auquel cas la sortie respective du relais 4 est connectée à un émetteur RF, par exemple pour commander l'ouverture d'un portail à l'extérieur du bâtiment 2 dans lequel se trouve le système domotique 1.

L'automate 3 commande le relais 4, afin d'envoyer ou non un signal sur chacune des sorties de celui-ci.

L'automate 3 est également connecté dans ce premier mode de réalisation à un récepteur de signaux sans fil 5, qui communique avec des actionneurs 6. Chaque actionneur 6 peut notamment être un interrupteur, un clavier, un gradateur, un capteur de température, un capteur de passage, un capteur de présence, un capteur d'humidité, un capteur de luminosité, un détecteur de fumée, sans que cette liste soit limitative. L'actionneur 6 peut être fixe dans le bâtiment 2, ou apte à être transporté par l'utilisateur lorsque celui-ci se déplace dans le bâtiment 2. De préférence, les actionneurs 6 sont des dispositifs de type Enocean^{®} qui présentent l'avantage d'être autonomes en énergie (de type à récolte d'énergie), ce qui implique que les actionneurs 6 n'ont pas besoin d'être alimentés en électricité pour fonctionner.

Chaque actionneur 6 envoie un signal au récepteur de signaux 5, lequel transmet ce signal à l'automate 3 qui, en fonction du signal reçu, déclenche une action sur une ou plusieurs des sorties du relais 4.

En pratique, le signal envoyé par chaque actionneur 6 est codé sur une fréquence particulière de manière unique sur plusieurs octets, de préférence par utilisation d'un dispositif envoyant un signal conforme à la norme Enocean^{®} codé de manière unique sur 14 octets.

Le récepteur de signaux 5, également de type Enocean^{®} lorsque les actionneurs sont de type Enocean^{®}, reçoit le signal émis par un actionneur 6, et le transmet à l'automate 3.

En fonction du code du signal reçu d'un actionneur 6 par l'intermédiaire du récepteur de signaux 5, une action est programmée dans l'automate 3 pour ouvrir ou fermer une ou plusieurs sorties du relais 4.

Le récepteur de signaux 5 peut être, comme sur la Figure 1, distinct de l'automate 3, mais peut également être intégré à celui-ci.

Le système domotique 1 comprend également une interface utilisateur 7, avantageusement un écran tactile, reliée à l'automate 3 et permettant de programmer celui-ci.

L'interface utilisateur 7 permet d'associer un actionneur 6 à l'un des dispositifs commandés par le système domotique 1 par programmation dans l'automate 3 de la commande à envoyer au relais 4 lors de la réception d'un signal codé de manière unique émis par un actionneur 6. Pour cela, l'utilisateur sélectionne sur l'interface utilisateur 7 le dispositif commandé qu'il souhaite commander avec un actionneur 6 et déclenche cet actionneur 6. Un programme dans l'automate 3 reconnaît le signal codé de manière unique reçu par le récepteur de signaux 5 depuis l'actionneur 6, et associe cet actionneur 6 au dispositif commandé sélectionné par l'utilisateur. L'automate 3 associe donc un actionneur 6 et un dispositif commandé par apprentissage.

Lorsque le signal codé de manière unique émis par un actionneur 6 est programmé dans l'automate 3 avec une commande associée sur le relais 4, un signal de cet actionneur 6 reçu par le récepteur de signaux 5 est transmis à l'automate 3 qui envoie la commande correspondante au relais 4 pour commander le dispositif commandé.

Lorsque l'utilisateur souhaite changer la commande associée à un actionneur 6 particulier, il utilise l'interface utilisateur 7 pour programmer dans l'automate 3 la commande à effectuer sur le relais 4 lors d'une prochaine réception du signal codé de manière unique lié à cet actionneur 6, par apprentissage comme indiqué ci-dessus.

De même, lors de l'ajout d'un nouvel actionneur 6 dans le système domotique 1, l'utilisateur utilise l'interface utilisateur 7 pour programmer dans l'automate 3 la commande à effectuer sur le relais 4 lors d'une prochaine réception du signal codé de manière unique lié à ce nouvel actionneur 6, toujours par apprentissage comme indiqué ci-dessus.

Il est ainsi très facile pour l'utilisateur, par l'intermédiaire de l'interface utilisateur 7, de programmer la commande associée à chaque actionneur 6 dans l'automate 3, par apprentissage de l'automate 3 avec l'interface utilisateur 7.

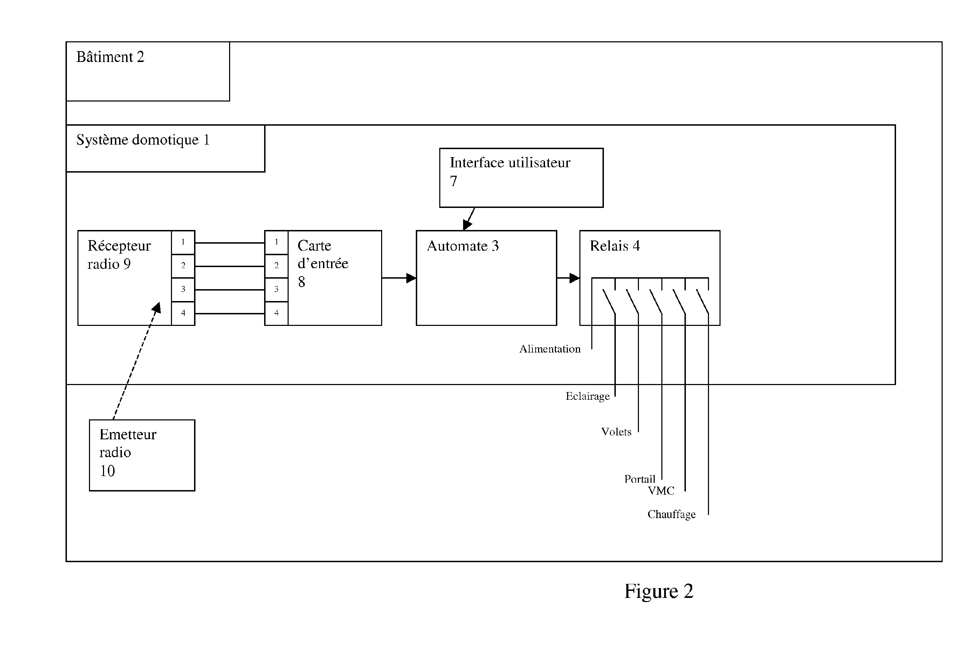

Si l'on se réfère maintenant à la Figure 2, on peut voir qu'il y est représenté un système domotique 1 selon un deuxième mode de réalisation de l'invention.

Le système domotique 1 dans ce deuxième mode de réalisation comprend, comme dans le premier mode de réalisation représenté sur la Figure 1, un automate 3, un relais 4, des dispositifs commandés et une interface utilisateur 7. Ces éléments analogues à ceux du premier mode de réalisation ne seront pas décrits plus en détail.

Dans ce deuxième mode de réalisation, le système domotique 1 comprend un récepteur radio 9, connecté à une carte d'entrée 8 elle-même connectée à l'automate 3. Un signal reçu d'un actionneur de type émetteur radio 10, actionné par un utilisateur, est reçu par le récepteur radio 9, et associé à une entrée spécifique de la carte d'entrée 8 (une fréquence radio reçue est associée à une sortie du récepteur radio 9). La carte d'entrée 8 génère un code unique envoyé à l'automate 3, pour chaque entrée de celle-ci. Dans la Figure 2, un seul émetteur radio 10 a été représenté pour des raisons de simplicité. Il est bien entendu qu'un système domotique 1 selon le deuxième mode de réalisation pourrait comporter plusieurs émetteurs radio 10, par exemple un par dispositif commandé.

Ainsi, un code unique est généré pour chaque émetteur radio, de manière analogue au premier mode de réalisation.

L'interface utilisateur 7 permet, de manière analogue au premier mode de réalisation, de configurer par apprentissage chaque émetteur radio 10 du système domotique 1, par sélection dans un mode de programmation sur l'interface utilisateur 7 d'un dispositif commandé à commander et actionnement de l'émetteur radio 10 correspondant. Un programme dans l'automate 3 associe alors l'émetteur radio 10 au dispositif commandé.

Dans les deux modes de réalisation de l'invention, l'interface utilisateur 7 peut être commandée par l'utilisateur directement sur le boîtier du système domotique 1. Il est également possible de relier cette interface utilisateur à un ordinateur personnel, à un téléphone intelligent (smartphone) ou à un réseau de type intranet ou Internet, au moyen d'une connexion câblée (de type RJ45 par exemple) ou d'une liaison sans fil de type Wifi, une prise approprié ou une borne Wifi reliée à l'interface utilisateur 7 étant alors prévue dans le système domotique 1.

Les deux modes de réalisation de l'invention peuvent être combinés dans un même système domotique.

## Revendications

1. Système domotique (1) pour la commande de dispositifs commandés dans un bâtiment (2), ledit système domotique (1) comprenant :
- un boîtier comprenant :
- une alimentation électrique ;
- un relais (4), chaque sortie du relais (4) étant connectée à l'un des dispositifs commandés par le système domotique (1) ;
- un récepteur (5, 9) de signaux sans fil ;
- un automate (3) commandant l'ouverture et la fermeture de chaque sortie du relais (4), en fonction de signaux reçus sur le récepteur (5, 9) de signaux sans fil ; et
- des actionneurs (6, 10) sans fil du système domotique (1), répartis dans le bâtiment (2), aptes à émettre de manière sans fil un signal au récepteur (5) de signaux sans fil dans le boîtier pour la commande des dispositifs commandés par le système domotique (1),
**caractérisé par le fait que** le signal émis de manière sans fil au récepteur (5, 9) de signaux par chaque actionneur (6, 10) est identifié dans le système domotique (1) par un code unique pour chaque actionneur (6, 10), le système domotique (1) comprenant en outre une interface utilisateur (7) pour associer de manière reconfigurable par l'utilisateur dans l'automate (3) le code unique de chaque actionneur (6, 10) et l'un des dispositifs commandés par le système domotique (1), un actionneur (6, 10) commandant dans le système domotique (1) le dispositif commandé auquel son code unique est associé dans l'automate (3).

2. Système domotique (1) selon la revendication 1, **caractérisé par le fait que** le récepteur de signaux sans fil (5, 9) est intégré à l'automate (3).

3. Système domotique (1) selon l'une des revendications 1 ou 2, **caractérisé par le fait que** les actionneurs (6) émettent sur une même fréquence un signal codé sur un ou plusieurs octets, un code unique étant associé à chaque actionneur (6) dans le système domotique (1) et **par le fait que** le récepteur de signaux (5) transmet le code reçu directement à l'automate (3).

4. Système domotique (1) selon la revendication 3, **caractérisé par le fait que** le signal est un signal codé sur 14 octets.

5. Système domotique (1) selon l'une des revendications 1 ou 2, **caractérisé par le fait que** les actionneurs (10) sont des émetteurs radio, émettant sur différentes fréquences, le système domotique (1) comprenant en outre des moyens d'association (8) d'un code unique à chaque fréquence, lesdits moyens d'association (8) étant connectés au récepteur de signaux sans fil (9) et transmettant un code unique pour chaque actionneur (10) à l'automate (3) lors de la réception d'un signal sans fil sur le récepteur de signaux sans fils (9).

6. Système domotique (1) selon l'une des revendications 1 à 5, **caractérisé par le fait que** l'interface utilisateur (7) est une interface graphique, de préférence un écran tactile.

7. Système domotique (1) selon l'une des revendications 1 à 6, **caractérisé par le fait que** les actionneurs (6) sont autonomes en énergie, de type à récolte d'énergie.

8. Système domotique (1) selon l'une des revendications 1 à 7, **caractérisé par le fait que** les dispositifs commandés par le système domotique (1) sont un ou plusieurs parmi : un système d'éclairage, un système de chauffage, un système de climatisation, un système d'ouverture/fermeture de volets, un système d'arrosage de jardin, un système de vidéosurveillance, un système d'ouverture/fermeture de porte, un système de ventilation mécanique contrôlée, un thermostat.

9. Système domotique (1) selon l'une des revendications 1 à 8, **caractérisé par** le fait chaque actionneur (6) est l'un parmi un interrupteur, un clavier, un gradateur, un capteur de température, un capteur de passage, un capteur de présence, un capteur d'humidité, un capteur de luminosité, un détecteur de fumée.

10. Système domotique (1) selon l'une des revendications 1 à 9, **caractérisé par le fait qu'**il comprend en outre des moyens de commande à distance de l'automate (3).
